# EUROPÄISCHE PATENTSCHRIFT

(11) **EP 1 713 564 B1**
(45) Veröffentlichungstag und Bekanntmachung des Hinweises auf die Patenterteilung: **18.11.2009**
(21) Anmeldenummer: 05700534.0
(22) Anmeldetag: 12.01.2005
(51) Int. Cl.: B01D 53/04

(54) **REAKTORBEHÄLTER FÜR FESTBETTGASREINIGUNG**
REACTOR VESSEL FOR FIXED BED GAS PURIFICATION
RECIPIENT REACTIONNEL POUR PURIFICATION DE GAZ A LIT FIXE

(30) Priorität: 30.01.2004 DE 102004004995
(43) Veröffentlichungstag der Anmeldung: 25.10.2006
(73) Patentinhaber: CENTROTHERM CLEAN SOLUTIONS GMBH + CO. KG, 89143 Blaubeuren (DE)
(72) Erfinder: KRÜGER, Ulrich, 44269 Dortmund (DE)
(74) Vertreter: Lippert, Stachow & Partner
(86) Internationale Anmeldenummer: PCT/DE2005/000021
(87) Internationale Veröffentlichungsnummer: WO 2005/072849

(56) Entgegenhaltungen:
- EP-A- 0 884 086
- DE-A1- 4 444 367
- FR-A- 2 116 666
- US-A- 3 933 643
- US-A- 4 353 722

## Beschreibung

Die vorliegende Erfindung betrifft einen Reaktorbehälter für die Gasreinigung durch Festbettabsorption, insbesondere von toxische Inhaltsstoffe enthaltenden Abgasen aus der Herstellung elektronischer Bauteile, wie Mikrochips. Derartige Reaktorbehälter weisen aufgrund der vergleichsweise geringen Abgasströme relativ geringe Abmessungen auf, die beispielsweise durch Festbettvolumina von 20 bis 200 Liter gekennzeichnet sind.

Typische Abgase derartiger Herstellungsprozesse weisen toxische Inhaltsstoffe wie z.B. PH₃, AsH₃, SiH₄, NH₃, SiH₂Cl₂, HCl, BCl₃, HF, F₂, SiF₄, WF₆, HBr, BF₃ und deren Mischungen aus.

Es ist bekannt, die toxischen Inhaltsstoffe derartiger Abgase adsoptiv und/oder absorptiv an einem Festbett zu binden und das Festbett nach Beladung zu regenerieren oder insbesondere als Sondermüll zu entsorgen. Typische Festbetten bestehen aus Granulatschüttungen aus Aktivkohle, Molekularsieben und/oder reinen oder auf Trägermaterialien aufgebrachten Metalloxiden, anorganischen Carbonaten, Sulfaten, Phosphaten, Hydroxiden oder deren Mischungen, die gegebenenfalls oberflächlich modifiziert sein können. Je nach Zusammensetzung des Abgases kann es erforderlich sein, unterschiedliche Absorbentien in hintereinandergeschalteten Festbetten einzusetzen und/oder Tröpfchen- oder Feststoffabscheider vor das Festbett zu schalten, um ein "Verstopfen" des Festbettes durch abgeschiedene Feststoffe zu verhindern.

Es ist ferner bekannt, den Festbettreaktor gleichzeitig als Transportbehälter für Sondermüll auszugestalten, so dass das beladene Festbettgranulat ohne risikobehaftetes Handling wie Umfüllen, etc., in dem Festbettreaktor nach Abklemmen der Abgaszu- und Reingasableitung als Sondermüll zu einer Sondermüllentsorgungsanlage transportfähig ist. Ein derartiges System ist beispielsweise in der EP-A 497 328 beschrieben.

Problematisch ist das Öffnen und Entleeren derartiger Behälter zur Entsorgung des beladenen Sorbens wegen des Risikos der Kontamination der Umgebung und des Bedienungspersonals durch Staubentwicklung und im Behälter enthaltene toxische Restgase.

Aufgabe der Erfindung ist es, derartige Abgasbehandlungssysteme und Transportbehälter weiter zu vereinfachen, insbesondere die Anzahl der Arbeitsschritte beim Ausbau des Abgasbehandlungsbehälters nach Beladung und Anschluss eines mit frischem Absorbens gefülltem Reaktorbehälters zu reduzieren und zu erleichtern.

Aufgabe der Erfindung ist es ferner, einen Reaktor und Transportbehälter zu schaffen, der unterhalb eines Flüssigkeitsspiegels, im allgemeinen innerhalb eines Wasserbades, geöffnet und entleert werden kann, insbesondere so vollständig zerlegt werden kann, dass dessen Einzelteile keine inneren Hohlräume aufweisen, in denen Sorbensreste verschleppt werden können.

Aufgabe der Erfindung ist es ferner, sowohl die Abscheidung von festen und flüssigen Abgasbestandteilen als auch die Absorption von toxischen gasförmigen Bestandteilen in einem einzigen Reaktorbehälter durchzuführen.

Zur Lösung dieser und weiterer Aufgaben wird ein Reaktorbehälter für Festbettgasreinigung in vertikaler Anordnung vorgeschlagen, der die folgenden Elemente aufweist:
a) einen äußeren zylindrischen Behälter,
b) einen koaxial zum äußeren Behälter angeordneten inneren zylindrischen Behälter zur Aufnahme des Festbettes, wobei
c) die untere Stirnseite des inneren Behälters als Sieb ausgebildet ist
d) und die obere Stirnseite des inneren Behälters ein die obere Stirnseite des äußeren Behälters durchstoßendes verschließbares Anschlussrohr aufweist, und
e) die obere Stirnseite des äußeren Behälters ein verschließbares Anschlussrohr zu dem Zwischenraum zwischen den Behältern aufweist.

Vorzugsweise ist das Anschlussrohr des inneren Behälters koaxial zur Behälterachse angeordnet und stützt den inneren Behälter zentral gegen den äußeren Behälter, insbesondere bevorzugt mit Abstand gegen die obere Stirnseite des äußeren Behälters, ab.

Weiter bevorzugt ist die untere Stirnseite des inneren Behälters gegen die untere Stirnseite des äußeren Behälters zentrierend abgestützt, insbesondere bevorzugt ist die untere Stirnseite des inneren Behälters mit Abstand gegen die untere Stirnseite des äußeren Behälters befestigt, weiter bevorzugt lösbar befestigt.

Dadurch, dass der innere Behälter mit Ausnahme der axialen Abstützung gegen den äußeren Behälter in diesem praktisch frei schwebend ohne Wandkontakt angeordnet ist, wird verhindert, dass seitliche Stöße auf den äußeren Behälter während des Transports den inneren Behälter beschädigen können.

Bevorzugt ist mindestens eine der Abstützungen des inneren Behälters gegen den äußeren Behälter axial variabel, beispielsweise mittels O-Ring- oder Gleitring-Dichtung ausgebildet, so dass axiale Abmessungstoleranzen aufgrund der Fertigung, Montage, Dichtungselastizität und Temperaturdifferenzen im wesentlichen spannungsfrei ausgeglichen werden.

Der mit dem Absorbens gefüllte Reaktorbehälter (das Absorbens befindet sich in dem inneren Behälter) wird so betrieben, dass die Abgaszufuhrleitung an das vorzugsweise in den Raum zwischen den oberen Stirnseiten des inneren und des äußeren Behälters mündende Anschlussrohr angeschlossen wird, das Abgas den Ringraum zwischen den Behältern nach unten durchströmt, wobei im Abgas enthaltene Tröpfchen und Feststoffpartikel sowie Sublimate von sublimierbaren Abgasbestandteilen, wie zum Beispiel AlCl₃, WOF₄ und/oder NH₄Cl, an den Ringraumwänden abgeschieden werden, das im wesentlichen von den abscheidbaren Bestandteilen befreite Abgas durch die als Sieb ausgebildete untere Stirnseite des inneren Behälters in das Absorbensbett eintritt, dort von den toxischen Abgasbestandteilen befreit wird, das von toxischen Bestandteilen befreite Abgas unterhalb der oberen Stirnseite des inneren Behälters aus dem Bett austritt und in das die obere Stirnseite des äußeren Behälters durchstoßende Anschlussrohr des inneren Behälters eintritt.

Der erfindungsgemäße Reaktorbehälter wird vorzugsweise bei Umgebungstemperatur betrieben, wobei eine leichte Temperierung aufgrund der Einleitung von Abgasen mit erhöhter Temperatur und/oder aufgrund exothermer Reaktion auf dem Festbett nicht schädlich ist. Die Abgaszuleitungen sind im allgemeinen beheizt, um Ablagerungen sublimierbarer Substanzen aus der Gasphase zu vermeiden. Der Reaktorbehälter wird ferner bevorzugt etwa bei Normaldruck betrieben, bevorzugt bei leichtem Unterdruck aufgrund der bevorzugten Förderung des Abgases durch eine reingasseitige Absaugung.

Es wurde gefunden, dass eine ausreichende Abscheidung im Ringraum erzielt wird, wenn der Ringraum eine Abscheidefläche von mindestens 20 m² pro m³ Ringraumvolumen aufweist. Abscheideflächen von mehr 80 m² pro m³ Ringraumvolumen sind bei den hier angesprochenen Abgasen aus der Herstellung elektronischer Bauelemente nicht erforderlich. Die Verweilzeit des Abgases im Ringraum sollte vorzugsweise 5 Sekunden, insbesondere bevorzugt 10 Sekunden, bis 30 Sekunden, vorzugsweise bis 20 Sekunden, betragen.

Bevorzugt ist mindestens die Abgaszufuhrleitung und das Zufuhrrohr des Reaktorbehälters mit einer Schnellkupplung mit selbstschließendem Ventil versehen. Bevorzugt wird eine derartige Kupplung ohne Totvolumen eingesetzt, so dass bei Entkupplung keine Abgase freigesetzt werden. Besonders bevorzugt sind beide Anschlussrohre mit derartigen Kupplungen ausgestattet. Ein Vorteil im Handling des erfindungsgemäßen Reaktorbehälters resultiert auch daraus, dass sowohl der Abgaszuleitungsanschluss als auch der Reingasauslass an derselben Seite (Oberseite) des Reaktors angeordnet sind, so dass die Kupplungen bei auf dem Boden stehendem Reaktorbehälter bedient werden können.

Zur Befüllung und Entleerung des inneren Behälters mit dem Absorberbettgranulat sowie zur Reinigung des Reaktorbehälters vor der Wiederbefüllung sind sowohl der innere als auch der äußere Behälter in mindestens einer Ebene quer zur Behälterachse geteilt, wobei die beiden Teile lösbar gasdicht miteinander verbunden sind. Als lösbare Verbindung dient vorzugsweise eine mit einer Dichtung versehene Spannringverbindung. Vorzugsweise sind die Behälter in Nähe mindestens einer der Behälterstirnseiten geteilt, besonders bevorzugt in der Nähe jeweils beider Stirnseiten, so dass jeder der Behälter aus einem im wesentlichen rohrförmigen Mittelteil, einem Bodenteil und einem Kopfteil besteht.

Derartige Spannringverbindungen lassen sich nach Eintauchen des Reaktors in ein Flüssigkeitsbad auf einfache Weise öffnen. Sind entsprechend der bevorzugten Ausführungsform der Erfindung sowohl die oberen als auch die unteren Stirnseiten sowohl des äußeren als auch des inneren Behälters durch Spannringverbindungen mit dem jeweiligen zylindrischen Teil verbunden, kann der Reaktor unterhalb des Flüssigkeitsspiegels so vollständig zerlegt werden, dass das Sorbens ohne Schüttbewegung herausgleitet und lediglich im wesentlichen glatte Behälterelemente erhalten werden, die durch einfaches Abspülen bei geringst möglichem Manipulationsaufwand gereinigt werden können.

Der innere Behälter weist vorzugsweise unterhalb der oberen Stirnseite ein zusätzliches Sieb zur Abdeckung des Absorberbettes auf, sodass oberhalb des Bettes ein definierter Reingassammelraum gebildet wird.

Im Falle, dass die Abgasreinigung den Einsatz unterschiedlicher Absorber erfordert, werden diese vorzugsweise in dem inneren Behälter übereinander geschichtet, mit vorzugsweise einem zwischen den Schichten angeordneten weiteren Trennsieb.

Die bevorzugte Eignung des Reaktorbehälters gleichzeitig als Gefahrgut-Transportbehälter wird durch eine entsprechend stabile konstruktive Gestaltung gewährleistet. Hierzu gehören die Materialstärke der Behälterwände, die Abstützung des inneren Behälters bezüglich beider Stirnseiten, sowie vorzugsweise umlaufende Versteifungselemente am Umfang insbesondere des äußeren Behälters. Ferner sind Mittel zur gasdichten Anbringung einer Transportabdeckung an der oberen Stirnseite des äußeren Behälters als Schutz für die Ventilstutzen und Leckage in die Umgebung vorgesehen.

Gegenstand der Erfindung ist auch das Verfahren zur Reinigung toxische Inhaltsstoffe enthaltender Gase in einem vertikal durchströmten Festbett, das dadurch gekennzeichnet ist, dass das Gas vor Eintritt in das Festbett einen das Festbett umgebenden Ringraum durchströmt, wobei an den Wänden des Ringraumes Tröpfchen und Feststoffpartikel, insbesondere sublimierbare Substanzen, abgeschieden werden.

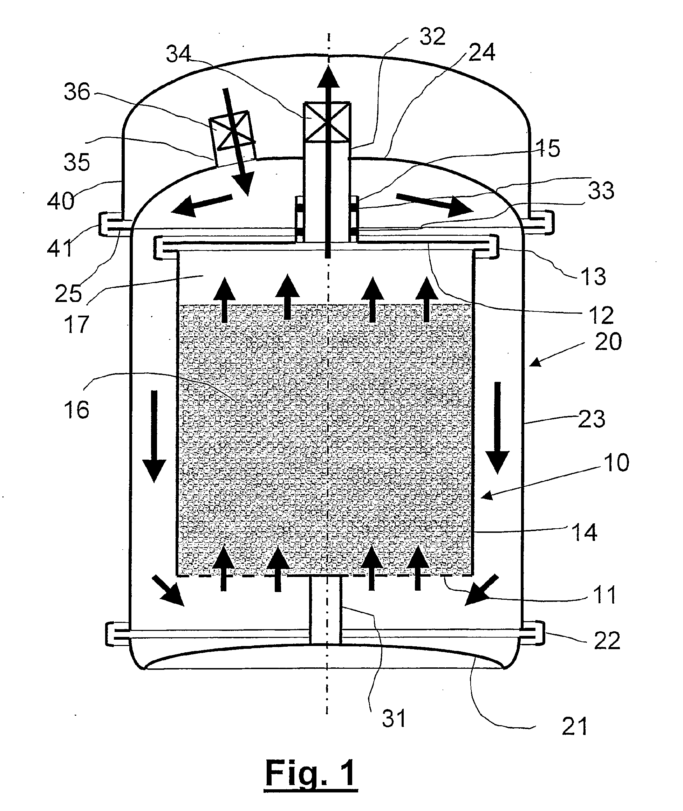

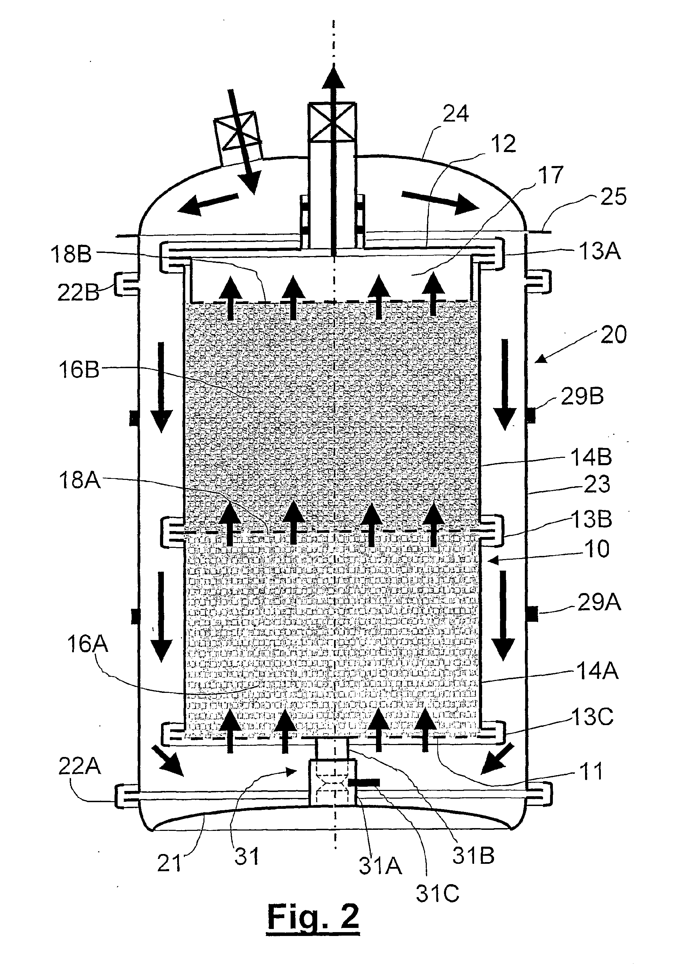

Das Verfahren ist ferner **dadurch gekennzeichnet, dass** ein erfindungsgemäßer Reaktorbehälter eingesetzt wird, wobei die Verweilzeit des zu reinigenden Gases in dem Ringraum zwischen 5 und 30 Sekunden beträgt.
Diese und weitere Aspekte sowie weiter bevorzugte Ausführungsformen der Erfindung werden nachfolgend anhand der beigefügten Figuren 1 und 2 beispielhaft näher erläutert:
Fig. 1 zeigt schematisch eine erste Ausführungsform der Erfindung.
Fig. 2 zeigt schematisch eine weitere Ausführungsform der Erfindung mit beispielhaft einem zweistufigen Absorberbett.

Gemäß Fig. 1 weist der erfindungsgemäße Reaktorbehälter einen im wesentlichen zylindrischen inneren Behälter 10 und einen im wesentlichen zylindrischen äußeren Behälter 20 auf. Die untere Stirnseite 11 des inneren Behälters 10 ist als Siebplatte ausgebildet. Die obere Stirnseite 12 des inneren Behälters 10 ist über einen Spannring 13 sowie einen nicht dargestellten Dichtring aus gummielastischem Material mit dem zylindrischen Teil 14 lösbar verbunden und weist axial einen Rohrstutzen 15 auf. Die untere Stirnseite des äußeren Behälters 20 ist als ein Bodenteil 21 ausgebildet, das über einen Spannring 22 und einen nicht dargestellten Dichtring mit dem zylindrischen Teil 23 des äußeren Behälters lösbar verbunden ist. Das Bodenteil 21 des äußeren Behälters ist mit der unteren Stirnseite 11 des inneren Behälters über ein Rohrstück 31 im Abstand zentrierend gehalten; beispielsweise kann das Rohrstück 31, wie dargestellt, beidseitig sowohl mit dem Bodenteil 21 und der Siebplatte 11 verschweißt sein.
In die obere Stirnseite 24 des äußeren Behälters 20 ist axial ein Rohr 32 eingeschweißt, das mit seiner einen Seite in den Rohrstutzen 15 des inneren Behälters hineinragt und gegen diesen mittels Dichtringen 33 abgedichtet ist. Alternativ kann das Rohr 32 auch axial in die obere Stirnseite 12 des inneren Behälters eingeschweißt sein und die Durchführung durch die obere Stirnseite des äußeren Behälters mittels Dichtringen abgedichtet sein. Die andere Seite des Rohres 32 enthält ein Kupplungsstück 34 mit selbstschließendem Ventil zum Anschluss der Reingasableitung, die das entsprechende Kupplungsgegenstück aufweist. Ferner weist die obere Stirnseite 24 des äußeren Behälters 20 einen exzentrisch angeordneten Rohrstutzen 35 mit Kupplungsventil 36 zum Anschluss der Abgaszuleitung auf. Der äußere Behälter weist ferner im oberen Bereich Mittel 25 zur gasdichten Befestigung einer Transporthaube 40 mittels Spannring 41 auf. Die Schraffur innerhalb des inneren Behälters 10 deutet die Füllung mit dem Absorberbettgranulat 16 an. Die Füllung erfolgt bis zu einer solchen Höhe unterhalb der oberen Stirnseite 12, dass Gassammelraum 17 gebildet wird, der einen gleichmäßig über die Querschnittfläche verteilten Gasaustritt aus dem Bett gewährleistet.

Fig. 2 zeigt einen erfindungsgemäßen Reaktorbehälter mit einem zweistufigen Absorberbett mit unterschiedlichen Absoptionsmitteln 16A und 16B, die durch einen Siebplatteneinsatz 18A voneinander getrennt sind und nacheinander durchströmt werden. Der Gassammelraum 17 des inneren Behälters 10 ist durch einen Siebplatteneinsatz 18B abgedeckt. Ferner sind sowohl die untere, als Siebplatte ausgebildete Stirnseite 11 als auch die obere Stirnseite 12 des inneren Behälters 10 mittels Spannringen 13C bzw. 13A lösbar und mittels nicht dargestelltem Dichtring gasdicht mit dem zylindrischen Teil 14A, 14B verbunden. Das zylindrische Teil selbst besteht aus zwei Teilen 14A und 14B, die über Spannring 13B lösbar gasdicht verbunden sind. Die zentrierende Abstützung der unteren Stirnseite 11 des inneren Behälters gegen die den Bodenteil 21 ist als bevorzugte lösbare Verbindung dargestellt: Das Bodenteil 21 weist eine mit diesem fest verbundene Hülse 31A auf, die Siebplatte 11 einen mit dieser festverbundenen, in die Hülse passenden Stift 31B auf, die gegeneinander mittels Arretierstift 31C zum Beispiel durch Schraubgewinde arretierbar sind. Die lösbare Verbindung kann ebenso als Bajonettverschluss ausgebildet sein. In der dargestellten Ausführungsform der Erfindung ist ferner der äußere Behälter 20 so ausgebildet, dass sowohl Bodenteil 21 als auch Kopfteil 24 mit dem zylindrischen Teil 23 über Spannringe 22A bzw. 22B lösbar und mittels nicht dargestellter Dichtringe gasdicht verbunden sind. Ferner sind zur Erhöhung der Stabilität des äußeren Behälters umlaufende Verstärkungselemente 29A und 29B angedeutet. Diese können in Form von Ringförmigen Materialverstärkungen oder in Form von umlaufenden Ausbuchtungen ausgebildet sein.

Die Ausführungsform der Erfindung gemäß Fig. 2 erlaubt es, durch entsprechende Gestaltung von zylindrischen Teilen sowohl des inneren als auch des äußeren Behälters unter Erhaltung der als Boden- und Kopfteil ausgebildeten Stirnseiten, den Reaktorbehälter an unterschiedliche Anforderungen der Gasreinigung durch den Austausch nur der zylindrischen Teile nach Art eines Baukastensystems anzupassen.

## Patentansprüche

1. Reaktorbehälter für Festbettgasreinigung in vertikaler Anordnung, enthaltend die folgenden Elemente:
a) einen äußeren zylindrischen Behälter (20),
b) einen koaxial zum äußeren Behälter (20) angeordneten inneren zylindrischen Behälter (10) zur Aufnahme des Festbettes, wobei
c) die untere Stirnseite (11) des inneren Behälters (10) als Sieb ausgebildet ist
d) und die obere Stirnseite (12) des inneren Behälters (10) ein die obere Stirnseite (24) des äußeren Behälters (20) durchstoßendes verschließbares Anschlussrohr (32) aufweist, und
e) die obere Stirnseite (24) des äußeren Behälters (20) ein verschließbares Anschlussrohr (35) zu dem Zwischenraum zwischen den Behältern aufweist.

2. Reaktorbehälter nach Anspruch 1, wobei die untere Stirnseite (11) des inneren Behälters (10) gegen die untere Stirnseite (21) des äußeren Behälters (20) zentrierend abgestützt ist.

3. Reaktorbehälter nach Anspruch 1 oder 2, wobei das Anschlussrohr (32) des inneren Behälters (10) koaxial zur Behälterachse angeordnet ist.

4. Reaktorbehälter nach Anspruch 3, wobei das Anschlussrohr (32) gleichzeitig als zentrierende Abstützung des inneren Behälters (10) gegen den äußeren Behälter (20) ausgebildet ist.

5. Reaktorbehälter nach einem der Ansprüche 1 bis 4, wobei der innere Behälter (10) unterhalb der oberen Stirnseite (12) ein Sieb (18B) zur Abdeckung des Festbettes aufweist.

6. Reaktorbehälter nach einem der Ansprüche 1 bis 5, wobei mindestens eine Stirnseite jedes der Behälter lösbar mit der jeweiligen Zylinderwand (14) verbunden ist. ,

7. Reaktorbehälter nach Anspruch 6, wobei beide Stirnseiten der Behälter lösbar mit der jeweiligen Zylinderwand (14) verbunden sind.

8. Reaktorbehälter nach Anspruch 6 oder 7, wobei die lösbare Verbindung durch Spannringe (13, 22, 41, 13A, 13C) dargestellt wird.

9. Reaktorbehälter nach einem der Ansprüche 1 bis 8, wobei zumindest das Anschlussrohr mit einer Schnellkupplung mit selbstschließendem Ventil (34, 36) zum Anschluss einer Abgaszuleitung versehen ist.

10. Reaktorbehälter nach Anspruch 9, wobei die Schnellkupplung ohne Totvolumen koppelt.

11. Reaktorbehälter nach einem der Ansprüche 1 bis 10, wobei die obere Stirnseite (24) des äußeren Behälters (20) Mittel zur gasdichten Transportabdeckung der Anschlussrohre aufweist.

12. Reaktorbehälter nach einem der Ansprüche 1 bis 11, wobei der zwischen dem inneren (10) und dem äußeren (20) Behälter gebildete Ringraum eine Wandfläche von 20 bis 80 m² pro m³ Ringraumvolumen aufweist.

13. Verfahren zur Reinigung toxische Inhaltsstoffe enthaltender Gase in einem vertikal durchströmten Festbett, **dadurch gekennzeichnet, dass** ein Reaktorbehälter nach einem der Ansprüche 1 bis 10 eingesetzt wird, wobei das Gas vor Eintritt in das Festbett nach unten durch einen das Festbett umgebenden Ringraum geleitet wird, wobei an den Wänden des Ringraumes Tröpfchen und Feststoffpartikel, insbesondere sublimierbare Substanzen, abgeschieden werden.

14. Verfahren nach Anspruch 13, **dadurch gekennzeichnet, dass** die Verweilzeit des zu reinigenden Gases in dem Ringraum mindestens 50% der Verweilzeit des Gases im Festbett beträgt.

15. Verfahren nach einem der Ansprüche 13 oder 14, **dadurch gekennzeichnet, dass** die Verweilzeit des Gases in dem Ringraum zwischen 5 und 30 Sekunden beträgt.

## Claims

1. Reactor vessel for fixed bed gas purification in a vertical arrangement, containing the following elements:
a) an outer cylindrical vessel (20),
b) an inner cylindrical vessel (10), arranged coaxially with the outer vessel (20), for receiving the fixed bed,
c) the lower end face (11) of the inner vessel (10) being formed as a sieve
d) and the upper end face (24) of the inner vessel (10) comprising a connecting pipe (32), which penetrates through the upper end face (24) of the outer vessel (20) and which can be sealed off, and
e) the upper end face (24) of the outer vessel (20) comprising a connecting pipe (35), which can be sealed off, to the intermediate space between the vessels.

2. Reactor vessel according to claim 1, wherein the lower end face (11) of the inner vessel (10) is supported in such a way as to be centred against the lower end face (21) of the outer vessel (20).

3. Reactor vessel according to either claim 1 or claim 2, wherein the connecting pipe (32) of the inner vessel (10) is arranged so as to be coaxial with the axis of the vessel.

4. Reactor vessel according to claim 3, wherein the connecting pipe (32) is simultaneously formed as the centring support of the inner vessel (10) against the outer vessel (20).

5. Reactor vessel according to any one of claims 1 to 4, wherein the inner vessel (10) comprises a sieve (18B) below the upper end face (12) to cover the fixed bed.

6. Reactor vessel according to any one of claims 1 to 5, wherein at least one end face of each of the vessels is detachably connected to the respective cylinder wall (14).

7. Reactor vessel according to claim 6, wherein both end faces of the vessel are detachably connected to the respective cylinder wall (14).

8. Reactor vessel according to either claim 6 or claim 7, wherein the detachable connection is formed by clamping rings (13, 22, 41, 13A, 13C)

9. Reactor vessel according to any one of claims 1 to 8, wherein at least the connecting pipe is provided with a quick-fitting coupling with a self-closing valve (34, 36) for connecting an exhaust pipe.

10. Reactor vessel according to claim 9, wherein the quick-fitting coupling couples without a dead volume.

11. Reactor vessel according to any one of claims 1 to 10, wherein the upper end face (24) of the outer vessel (20) comprises means for the gas-tight transport covering of the connecting pipes.

12. Reactor vessel according to any one of claims 1 to 11, wherein the annular space formed between the inner (10) and outer (20) vessel comprises a wall surface area of 20 to 80 m² for every m³ of volume of the annular space.

13. Method for purifying gases containing toxic components in a fixed bed which is flowed through vertically, **characterised in that** a reactor vessel according to any one of claims 1 to 10 is used, the gas being guided down through an annular space surrounding the fixed bed before entering the fixed bed, drops and solid particles, in particular sublimable substances, being precipitated on the walls of the annular space.

14. Method according to claim 13, **characterised in that** the time for which the gas to be purified is retained in the annular space is at least 50 % of the time for which the gas is retained in the fixed bed.

15. Method according to either claim 13 or claim 14, **characterised in that** the time for which the gas is retained in the annular space is between 5 and 30 seconds.

## Revendications

1. Récipient réactionnel pour la purification de gaz en lit fixe, selon une configuration verticale, renfermant les éléments suivants :
a) un récipient cylindrique extérieur (20),
b) un récipient cylindrique intérieur (10) monté coaxialement au récipient extérieur (20) pour recevoir le lit fixe,
c) la face frontale inférieure (11) du récipient intérieur (10) étant réalisée sous la forme d'un tamis,
d) la face frontale supérieure (12) du récipient intérieur (10) étant équipée d'une tubulure de jonction (32) obturable traversant la face frontale supérieure (24) du récipient extérieur (20), et
e) la face frontale supérieure (24) du récipient extérieur (20) comportant une tubulure de fonction (35) obturable avec le volume intermédiaire entre les récipients.

2. Récipient réactionnel selon la revendication 1,
dans lequel
la face frontale inférieure (11) du récipient intérieur (10) s'appuie contre la face frontale inférieure (21) du récipient extérieur (20), de façon à permettre son centrage.

3. Récipient réactionnel selon la revendication 1 ou 2,
dans lequel
la tubulure de jonction (32) du récipient intérieur (10) est située coaxialement à l'axe des récipients.

4. Récipient réactionnel selon la revendication 3,
dans lequel
la tubulure de jonction (32) est simultanément réalisée sous la forme d'un élément d'appui et de centrage du récipient intérieur (10) sur le récipient extérieur (20).

5. Récipient réactionnel selon l'une des revendications 1 à 4,
dans lequel
le récipient intérieur (10) est équipé, en dessous de sa face frontale supérieure (12) d'un tamis (18B) pour recouvrir le lit fixe.

6. Récipient réactionnel selon l'une des revendications 1 à 5,
dans lequel
au moins l'une des faces frontales de chacun des récipients est reliée de manière amovible avec la paroi cylindrique respective (14).

7. Récipient réactionnel selon la revendication 6,
dans lequel
les deux faces frontales des récipients sont reliées de manière amovible avec la paroi cylindrique respective (14).

8. Récipient réactionnel selon la revendication 6 ou 7,
dans lequel
la liaison amovible est réalisée à l'aide de bagues de serrage (13, 22, 41, 13A, 13C).

9. Récipient réactionnel selon l'une des revendications 1 à 8,
dans lequel
au moins une tubulure de jonction est munie d'un accouplement rapide avec une soupape à autoverrouillage (34, 36) pour permettre la jonction d'une conduite de transfert des gaz d'échappement.

10. Récipient réactionnel selon la revendication 9,
dans lequel
l'accouplement rapide permet un accouplement sans volume mort.

11. Récipient réactionnel selon l'une des revendications 1 à 10,
dans lequel
la face frontale supérieure (24) du récipient extérieur (20) comporte des moyens de recouvrement étanche aux gaz des tubulures de jonction.

12. Récipient réactionnel selon l'une des revendications 1 à 11,
dans lequel
le volume annulaire formé entre le récipient intérieur (10) et le récipient extérieur (20) présente une surface de paroi de 20 à 80 m² par m³ de volume annulaire.

13. Procédé de purification de gaz renfermant des matières toxiques dans un lit fixe traversé par un flux vertical,
**caractérisé en ce qu'**
on met en oeuvre un récipient réactionnel selon l'une des revendications 1 à 10, avant son entrée dans le lit flue, le gaz étant transféré vers le bas dans un volume annulaire entourant le lit fixe, des gouttelettes et des particules solides en particulier de matières sublimables étant séparées sur les parois de ce volume annulaire.

14. Procédé selon la revendication 13,
**caractérisé en ce que**
le temps de séjour du gaz à purifier dans le volume annulaire est égal à au moins 50 % du temps de séjour de ce gaz dans le lit fixe.

15. Procédé selon la revendication 13 ou 14,
**caractérisé en ce que**
le temps de séjour du gaz dans le volume annulaire est compris entre 5 et 30 secondes.
